# EUROPEAN PATENT SPECIFICATION

(11) **EP 1 764 976 B1**
(45) Date of publication and mention of the grant of the patent: **11.11.2009**
(21) Application number: 06019110.3
(22) Date of filing: 12.09.2006
(51) Int. Cl.: H04L 29/06, H04L 12/28

(54) **Client-server system**
Client-Server-System
Système client-serveur

(30) Priority: 13.09.2005 JP 2005265404
(43) Date of publication of application: 21.03.2007
(73) Proprietor: Funai Electric Co., Ltd., Daito-shi, Osaka 574-0013 (JP)
(72) Inventor: Nakase, Takafumi, c/o Funai Electric Co., Ltd., Daito-shi, Osaka 574-0013 (JP)
(74) Representative: Grünecker, Kinkeldey, Stockmair & Schwanhäusser Anwaltssozietät

(56) References cited:
- EP-A- 1 467 519
- EP-A- 1 513 262
- WO-A-02/45400

## Description

### BACKGROUND OF THE INVENTION

### Field of the Invention

The present invention relates to a client-server system.

### Description of Related Art

Conventionally, client terminal apparatuses and server apparatuses that provide communication via a wireless network such as a wireless LAN, have been known.

Specifically, a client terminal apparatus is directly connected to a wireless network to communicate with a server apparatus connected to the wireless network. The client terminal apparatus must be authenticated by the server apparatus before having connection with the server apparatus. In the authentication processing, for example, connection information that includes, for example, an identifier for identifying the wireless network and an encryption key for encoding or decoding communication data, which are set in the client terminal apparatus and the server apparatus, is used.

In some cases, the client terminal apparatus is connected to the second wireless network via an access point for connecting via a wireless or wired network to have communication with a server apparatus connected to the second wireless network. The client terminal apparatus must be authenticated, for example, by the access point before being connected to the second wireless network. In the authentication processing, for example, connection information including an identifier and/or an encryption key for example that is set in the client terminal apparatus and the access point, is used.

The authentication processing for authenticating the client terminal apparatus is triggered, for example, by inputting the connection information to the client terminal apparatus by a user.

Specifically, the client terminal apparatus is structured so that, for example, when a user inputs the connection information to the client terminal apparatus, the client terminal apparatus sets the connection information to send the connection information to a server apparatus or an access point. This triggers an authentication processing between the client terminal apparatus and the server apparatus. Specifically, the setting of the connection information for triggering the authentication processing involves a problem of a troublesome operation that requires the user to manually input, for example, connection information such as an identifier or an encryption key.

Thus, a method in which the authentication processing can be triggered by setting connection information by a simpler operation, has been suggested.

For example, a method in which an insertion of a recording medium by a user triggers the setting of connection information to start an authentication processing (for example, see Patent Publications 1 and 2), has been suggested.

Specifically, Patent Publication 1 discloses a method, for example, in which an insertion of a recording medium by a user triggers a client terminal apparatus (terminal) to install a predetermined driver to send predetermined information (default setting packet) to an access point. Then, the access point receives the sent predetermined information to read specific information of the client terminal apparatus, from the predetermined information. Thereafter, identical encryption keys are separately prepared for and set in the client terminal apparatus and the access point and the authentication processing is performed based on the encryption keys.

Patent Publication 2 discloses, for example, a method in which an insertion of a recording medium by a user triggers a personal computer connected to an access point (wireless LANAP) to read software for connecting and setting the access point from the recording medium, to prompt the user to operate a remote controller via a monitor screen. The remote controller previously memorizes therein an identifier and/or an encryption key (authentication information) set in the client terminal apparatus (wireless LAN client). In accordance with the operation of the remote controller by the user, the remote controller sends the identifier and/or encryption key to the access point. Thereafter, in the client terminal apparatus and the access point, the identifier and/or encryption key is used to perform an authentication processing.

Another method in which an operation of a switch by a user, an operation of an operation section or the like triggers the setting of connection information to start an authentication processing (see Patent Publications 3 and 4 for example), has been suggested.

Specifically, Patent Publication 3 discloses a method in which when a power source is turned ON by the depression of a predetermined switch (automatic registration switch) by a user for example, a client terminal apparatus (station apparatus) and an access point (access point apparatus) uses a previously-set temporal identifier or temporal encryption key to perform a temporal authentication processing. Then, when the access point authenticates the client terminal apparatus in the temporal authentication processing, the access point sends to the client terminal apparatus an identifier and/or an encryption key. Thereafter, the client terminal apparatus sets the identifier and/or the encryption key. Then, in the client terminal apparatus and the access point, the identifier and/or the encryption key is used to perform the authentication processing.

Patent Publication 4 discloses a method in which an operation by a user for example triggers a client terminal apparatus (wireless terminal) to transmit a transmission signal to an access point and the client terminal apparatus receives an identifier (access point ID) from the access point to set the identifier. When the client terminal apparatus is moved to a position close a to predetermined server apparatus (server that distributes set information) by a user, the client terminal apparatus receives an encryption key (setting information) from the predetermined server apparatus to set the encryption key. Thereafter, in the client terminal apparatus and the access point, the identifier and the encryption key are used to perform an authentication processing.
[Patent Publication 1] Japanese Patent Unexamined Publication No. 2005-142907
[Patent Publication 2] Japanese Patent Unexamined Publication No. 2005-123878
[Patent Publication 3] Japanese Patent Unexamined Publication No. 2005-117247
[Patent Publication 4] Japanese Patent Unexamined Publication No. 2005-65018

Although the methods disclosed in Patent Publications 1 to 4 do not require a user to manually input an identifier and/or an encryption key, these methods require some operations such as an insertion of a recording medium or a depression of a switch. Thus, these methods do not solve a problem of a troublesome operation.

EP-A-1 467 519 relates to a short distance wireless communication system using a mobile terminal and a wireless communication device. A wireless communication device, which is connected to a server for providing information via a network and is disposed at an access point for relaying information provision service by the server to a portable terminal having a short distance wireless communication function, includes a network interface for connecting to the network, a wireless communication interface for the short distance wireless communication with the portable terminal, a connection information exchange portion for exchanging connection information for communication establishment with the portable terminal prior to the short distance wireless communication with the portable terminal, and a wireless communication management portion for controlling the exchange process of the connection information by the connection information exchange portion and the communication establishment process with the portable terminal.

EP-A-1 513 262 relates to close range wireless communication among a plurality of communication devices. When a predetermined connection operation is performed in a first communication device an inquiry message is wirelessly transmitted in order to discover a device to be connected by the wireless communication after restricting a transmittable distance to a close range. When a predetermined standby operation is performed in a second communication device the inquiry message is received and a response message to the received inquiry message is wirelessly transmitted. When the response message is received, the first communication device performs connection processing with respect to the second communication device.

WO 02/45400 A relates to a method and system for communication with a wireless device. The system includes providing a controller having a discovery mode and an operation mode. In the discovery mode the controller is capable of registering wireless devices, in the operating mode the controller is capable of receiving transmissions from a wireless devices that has been registered. A wireless transmitter is provided which is capable of communicating wirelessly with the controller via wireless communication protocol. When the controller is placed into the discovery mode, and an actuator of the wireless device is actuated to wirelessly transmit the registration data from the wireless device to the controller, whereby the wireless device is registered with the controller. The controller is capable of interfacing with various wired devices including a camera and microphone and a motion sensor.

### SUMMARY OF THE INVENTION

It is an object of the present invention to provide a client-server system in which connection information for authenticating a client terminal apparatus, which is required for the client terminal apparatus to be connected to a server apparatus, can be set in the client terminal apparatus in a simple manner.

In order to solve the above problem, in accordance with the first aspect of the invention, a client-server system comprising a server apparatus and a client terminal apparatus connected to the server apparatus to have communication with the server apparatus via a wireless network,
wherein:
the server apparatus comprises:
   a transmission unit for transmitting connection information required for the client terminal apparatus to be connected to the server apparatus via a wireless network, to the client terminal apparatus immediately after a turning ON of a power source,
   the client terminal apparatus comprises:
      a memory unit for memorizing the connection information;
      a determination unit for determining whether the memory unit memorizes the connection information or not;
      a deletion unit for deleting the connection information memorized in the memory unit;
      a first annunciation unit for annunciating that the memory unit does not memorize the connection information when the determination unit determines that the memory unit does not memorize the connection information or when the deletion unit deletes the connection information memorized in the memory unit;
      a reception unit for receiving the connection information transmitted from the transmission unit when the determination unit determines that the memory unit does not memorize the connection information or when the deletion unit deletes the connection information memorized in the memory unit;
      a judgment unit for judging whether a predetermined time has passed or not since the determination unit determines that the memory unit does not memorize the connection information or since the deletion unit deletes the connection information memorized in the memory unit; and
      a second annunciation unit for annunciating that the connection information is not received when the reception unit fails to receive the connection information transmitted from the transmission unit until the judgment unit judges that the predetermined time has passed.

In accordance with the second aspect of the invention, a client-server system, comprising a server apparatus and a client terminal apparatus connected to the server apparatus to have communication with the server apparatus via a wireless network,
wherein:
the server apparatus comprises:
   a transmission unit for transmitting connection information required for the client terminal apparatus to be connected to the server apparatus via a wireless network, to the client terminal apparatus immediately after a turning ON of a power source,
   the client terminal apparatus comprises:
      a reception unit for receiving the connection information transmitted from the transmission unit.

It is preferable that the client terminal apparatus comprises:
a memory unit for memorizing the connection information received by the reception unit; and
a determination unit for determining whether the memory unit memorizes the connection information or not; wherein the reception unit receives the connection information transmitted from the transmission unit, when the determination unit determines that the connection information is not memorized in the memory unit.

It is preferable that the client terminal apparatus comprises:
an annunciation unit for annunciating that the connection information is not memorized, when the determination unit determines that the memory unit does not memorize the connection information.

It is preferable that the client terminal apparatus comprises:
a judgment unit for judging whether a predetermined time has passed or not since the determination unit determines that the memory unit does not memorize the connection information; and
a second annunciation unit for annunciating that the connection information is not received, when the reception unit fails to receive the connection information transmitted from the transmission unit until the jugdment unit judging that the predetermined time has passed.

It is preferable that the client terminal apparatus comprises:
a deletion unit for deleting the connection information memorized in the memory unit.

It is preferable that the transmission unit comprises a remote controller for operating an external apparatus connected to the server apparatus and/or the server apparatus, and
the connection information is transmitted from the remote controller to the reception unit by infrared ray.

It is preferable that the connection information comprises an identifier of the wireless network and an encryption key required for the server apparatus and the client terminal apparatus to have communication via the wireless network.

According to the first aspect of the invention, the transmission unit of the server apparatus can transmit the connection information to the client terminal apparatus, immediately after the turning ON of the power source of the server apparatus. The memory unit of the client terminal apparatus can memorize the connection information. Specifically, a mere operation by a user to turn ON the power source of the server apparatus can automatically set the connection information to the client terminal apparatus. Thus, the connection information can be easily set to the client terminal apparatus without requiring the user to perform a troublesome operation.

Furthermore, the deletion unit of the client terminal apparatus can delete the connection information memorized in the memory unit to prevent the client terminal apparatus from being set with the connection information. Thus, a to-be-connected server apparatus can be changed easily.

The first annunciation unit of the client terminal apparatus annunciates that the memory unit does not memorize the connection information, when the determination unit determines that the memory unit does not memorize the connection information or when the deletion unit deletes the connection information memorized in the memory unit. This allows a user to know whether the client terminal apparatus is set with the connection information or not and to know a timing at which the power source of the server apparatus should be turned ON.

Furthermore, the reception unit of the client terminal apparatus receives the connection information transmitted from the transmission unit of the server apparatus only when the determination unit determines that the memory unit does not memorize the connection information and only when the deletion unit deletes the connection information memorized in the memory unit, thus providing an efficient procedure.

Furthermore, the judgment unit of the client terminal apparatus can judge whether a predetermined time has passed or not since the determination unit determines that the memory unit does not memorize the connection information or since the deletion unit deletes the connection information memorized in the memory unit. The second annunciation unit of the client terminal apparatus annunciates that the connection information could not be received, when the reception unit could not receive the connection information transmitted from the transmission unit until the judgment unit judges that the predetermined time has passed. Thus, a user can know that the client terminal apparatus has failed to receive the connection information and also can know a second timing at which the power source of the server apparatus should be turned ON.

According to the second aspect of the invention, immediately after the turning ON of the power source of the server apparatus, the transmission unit of the server apparatus can transmit the connection information to the client terminal apparatus. Specifically, a mere operation by a user to turn ON the power source of the server apparatus can automatically set the connection information to the client terminal apparatus. Thus, the connection information can be easily set to the client terminal apparatus without requiring a troublesome task to the user.

Furthermore, the connection information transmitted from the transmission unit of the server apparatus is received by the reception unit of the client terminal apparatus only when the determination unit determines that the memory unit does not memorize the connection information, thus providing an efficient procedure.

Furthermore, the annunciation unit of the client terminal apparatus annunciates that the connection information is not memorized, when the determination unit determines that the memory unit does not memorize the connection information. Thus, a user can know whether the client terminal apparatus is set with the connection information or not and also can know a timing at which the power source of the server apparatus should be turned ON.

Furthermore, the judgment unit of the client terminal apparatus can judge whether a predetermined time has passed or not since the determination unit determines that the memory unit does not memorize the connection information. The second annunciation unit of the client terminal apparatus can annunciate that the connection information is not received, when the reception unit cannot receive the connection information transmitted from the transmission unit until the judgment unit judges that the predetermined time has passed. Thus, a user can know that the client terminal apparatus has failed to receive the connection information and also can know a second timing at which the power source of the server apparatus should be turned ON.

Furthermore, the deletion unit of the client terminal apparatus can delete the connection information memorized in the memory unit to prevent the client terminal apparatus from being set with the connection information. Thus, a to-be-connected server apparatus can be changed easily.

Furthermore, the transmission unit of the server apparatus comprises an existing remote controller for operating an external apparatus connected to the server apparatus and/or the server apparatus. Thus, the need for adding another apparatus is eliminated and thus the system can be structured with a low cost. Furthermore, the remote controller can be used to transmit the connection information from the server apparatus to the client terminal apparatus. Thus, the freedom degree of a layout of the server apparatus and the client terminal apparatus is increased and the apparatus is preferable.

Furthermore, the connection information comprises an identifier of a wireless network and an encryption key required for the server apparatus and the client terminal apparatus to have communication via the wireless network. Thus, the server apparatus can accurately authenticate the client terminal apparatus.

### BRIEF DESCRIPTION OF THE DRAWINGS

The present invention will become fully understood from the detailed description given hereinafter and the accompanying drawings given by way of illustration only, and thus are not intended as a definition of the limits of the present invention, wherein:
FIG. 1 is a view illustrating the entire structure of a client-server system in an embodiment of the present invention.
FIG. 2 is a flowchart for explaining a processing regarding the setting of connection information to a client terminal apparatus in the client-server system.

### PREFERRED EMBODIMENT OF THE INVENTION

Hereinafter, the embodiment according to the invention will be described in detail with reference to the drawings. It is noted that the scope of the invention is not limited to the illustrated examples in the drawings.

### <Structure>

First, a client-server system, a server apparatus, and a client terminal apparatus will be described with regards to the structures.

### [Structure of client-server system]

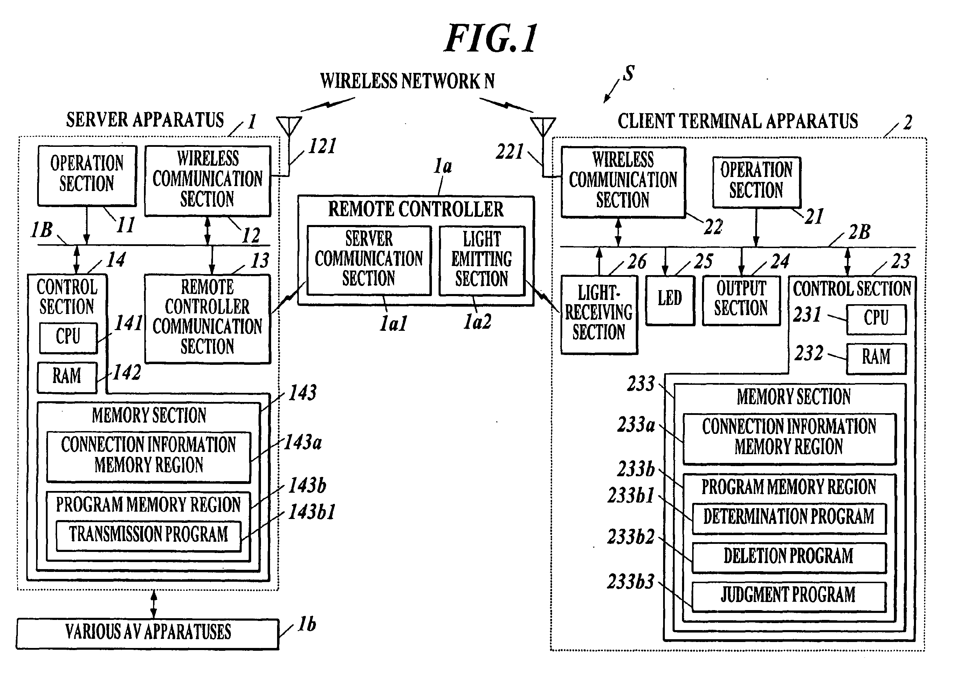

As shown in FIG. 1, a client-server system S includes, for example, a remote controller 1a and comprises a server apparatus 1 to which various AV apparatuses 1b as external apparatuses are connected and a client terminal apparatus 2. The server apparatus 1 is connected with the client terminal apparatus 2 via a wireless network N to have communication to each other.

The wireless network N is a network that is wireless Local Area Network (LAN) based on, for example, an Institute of Electrical and Electronic Engineers (IEEE) 802.11 standard or the like.

When the server apparatus 1 is communicated with the client terminal apparatus 2 via the wireless network N, an authentication processing is firstly performed to determine whether the client terminal apparatus 2 may be connected to the server apparatus 1 via the wireless network N or not. Only when in the authentication processing, the client terminal apparatus 2 is authenticated, for example, the server apparatus 1 transmits contents information required by the client terminal apparatus 2 (e.g., image information, audio information), to the client terminal apparatus 2. The contents information is information, for example, that is obtained from various AV apparatuses 1b connected to the server apparatus 1 and that is outputted from an output section 24 (which will be described later) included in the client terminal apparatus 2.

It is noted that in the authentication processing, connection information (which will be described later) is used. In the authentication processing, the client terminal apparatus 2 is authenticated by the server apparatus 1, for example, only when the connection information set in the server apparatus 1 is identical with the connection information of the client terminal apparatus 2.

### [Structure of server apparatus]

As shown in FIG. 1, the server apparatus 1 is structured to include, for example, an operation section 11, a wireless communication section 12, a remote controller communication section 13, and a control section 14. The respective sections are connected by a bus 1B. The server apparatus 1 includes the remote controller 1a and connects various AV apparatuses 1b.

The remote controller 1a provided in the server apparatus 1 operates various AV apparatuses 1b connected to the server apparatus 1 and/or server apparatus 1. The remote controller 1a also receives connection information transmitted from the server apparatus 1 to transmit the received connection information to the client terminal apparatus 2.

Specifically, the remote controller 1a is structured to include, for example, a server communication section 1a1 and a light emitting section 1a2 as shown in FIG. 1.

The server communication section 1a1 receives, for example, the connection information transmitted from a remote controller communication section 13 (which will be described later) of the server apparatus 1.

The connection information received by the server communication section 1a1 is transmitted by the light-receiving section 1a2 to a light-receiving section 26 (which will be described later) of the client terminal apparatus 2, for example, by infrared ray.

Various AV apparatuses 1b connected to the server apparatus 1 include arbitrary preferable AV apparatuses such as a television apparatus, a video recorder, a Personal Video Recorder (PVR), a tuner (e.g., tuner for Broadcasting Satellite (BS) broadcasting or Communication Satellite (CS) broadcasting), a Set Top Box (STB), a Digital Versatile Disk (DVD) player, or an audio apparatus.

The operation section 11 comprises, for example, a cursor key, a character/numeric key, and various function key. The operation section 11 outputs a depression signal generated with a key operation by a user, to the control section 14. The operation section 11 also may include, as required, another input apparatus (e.g., pointing device (e.g., mouse, touch panel), barcode reader, notepad, scanner, OCR apparatus).

The operation section 11 includes a "power source key" for example. When a user operates the "power source key", the power source of the server apparatus 1 is turned ON or OFF.

The wireless communication section 12 has communication with the client terminal apparatus 2 via the wireless network N. Specifically, the wireless communication section 12 includes, for example, an antenna 121 for providing the transmission of a wireless signal between the communication section 12 and the client terminal apparatus 2, a Radio Frequency (RF) converter (not shown), and a wireless LAN card (not shown) for the connection to a wireless LAN system that is based on an IEEE802.11 standard for example.

The remote controller communication section 13 transmits the connection information to the server communication section 1a1 of the remote controller 1a based on, for example, an instruction from the control section 14.

As shown in FIG. 1, the control section 14 includes, for example, a Central Processing Unit (CPU) 141, a Random Access Memory (RAM) 142, and a memory section 143.

The CPU 141 performs various control operations based on various processing programs for the server apparatus 1 memorized in the memory section 143.

The RAM 142 includes, for example, a program storage region for developing a processing program and the like executed by the CPU 141 and a data storage region for storing a processing result caused when inputted data or the above processing program is executed.

The memory section 143 memorizes: a system program that can be executed by the server apparatus 1; various processing programs that can be executed by the system program; data used when these processing programs are executed; and data obtained by a calculation processing by the CPU 141, and the like. A program memorized in the memory section 143 is in the form of a computer-readable program code.

Specifically, as show in FIG. 1, the memory section 143 has a connection information memory region 143a and a program memory region 143b and the like. The program memory region 143b memorizes, for example, a transmission program 143b1.

The connection information memory region 143a memorizes connection information. The connection information includes, for example, an identifier of the wireless network N, an encryption key for providing communication between the server apparatus 1 and the client terminal apparatus 2 via the wireless network N (i.e., encryption key for encoding or decoding communication data).

Here, it is assumed that the connection information memory region 143a previously memorizes the connection information. Specifically, it is assumed that the server apparatus 1 is previously set with the connection information.

The transmission program 143b1 allows the CPU 141 to realize a function to transmit connection information for allowing the client terminal apparatus 2 to be connected to the server apparatus 1 via the wireless network N, to client terminal apparatus 2 via the remote controller 1a, immediately after the turning ON of the power source of the server apparatus 1.

Specifically, when the power source of the server apparatus 1 is turned ON by the operation of a "power source key" of the operation section 11 by a user, the CPU 141 executes the transmission program 143b1 to obtain the connection information from the connection information memory region 143a. Then, the CPU 141 transmits the obtained connection information via the remote controller communication section 13 to the server communication section 1a1 of the remote controller 1a. Thereafter, the light emitting section 1a2 of the remote controller 1a transmits the connection information received by the server communication section 1a1 to the light-receiving section 26 (which will be described later) of the client terminal apparatus 2.

By executing the transmission program 143b1 as described above, the CPU 141 functions as a transmission unit.

The transmission unit comprises: the CPU 141 having executed the transmission program 143b1; the remote controller communication section 13; and the remote controller 1a.

### [Structure of client terminal apparatus]

As shown in FIG. 1, the client terminal apparatus 2 is structured to include, for example, the operation section 21, the wireless communication section 22, the control section 23, the output section 24, the Light Emitting Diode (LED) 25, and the light-receiving section 26. The respective sections are connected via the bus 2B.

The operation section 21 comprises, for example, a cursor key, a character /numeric key, and various function keys and outputs a depression signal generated by an operation by a user of a key. Alternatively, the operation section 21 also may include, as required, another input apparatus (e.g., pointing device (e.g., mouse, touch panel), barcode reader, notepad, scanner, OCR apparatus).

The operation section 21 includes a "power source key" for example. When a user operates the "power source key", the power source of the client terminal apparatus 2 is turned ON or OFF.

The wireless communication section 22 has almost the same structure as that of the wireless communication section 12 of the server apparatus 1 and has communication with the server apparatus 1 via the wireless network N. Specifically, the wireless communication section 22 includes, for example, an antenna 221 for providing the transmission and reception of a wireless signal between the communication section 22 and the server apparatus 1, a Radio Frequency (RF) converter (not shown), and a wireless LAN card (not shown) for the connection to a wireless LAN system that is based on an IEEE802.11 standard for example.

As shown in FIG. 1, the control section 23 includes, for example, a CPU 231, a RAM 232, and a memory section 233.

The CPU 231 performs various control operations based on various processing programs for the client terminal apparatus 2 memorized in the memory section 233.

The RAM 232 includes, for example, a program storage region for developing a processing program executed by the CPU 231 and a data storage region for storing inputted data and a processing result caused when the processing program is executed for example.

The memory section 233 memorizes, for example, a system program that can be executed by the client terminal apparatus 2, various processing programs that can be executed by the system program, data used when these processing programs are executed, and data for a processing result obtained by the calculation processing by the CPU 231. A program memorized in the memory section 233 is in the form of a computer-readable program code.

Specifically, as shown in FIG. 1, the memory section 233 has a connection information memory region 233a and a program memory region 233b for example. The program memory region 233b memorizes, for example, a determination program 233b1, a deletion program 233b2, and a judgement program 233b3.

The connection information memory region 233a functions as a memory unit to memorize connection information that is transmitted from the remote controller 1a and that is received by the light-receiving section 26. Specifically, when the light-receiving section 26 receives the connection information transmitted from the remote controller 1a, the client terminal apparatus 2 is set with the connection information.

The determination program 233b1 allows the CPU 231 to realize a function to determine whether the connection information memory region 233a memorizes the connection information or not.

By executing the determination program 233b1 as described above, the CPU 231 functions as a determination unit.

The deletion program 233b2 allows the CPU 231 to realize a function to delete the connection information memorized in the connection information memory region 233a.

Specifically, when an operation of the operation section 21 by a user instructs the CPU 231 to delete the connection information memorized in the connection information memory region 233a for example, the CPU 231 executes the deletion program 233b2 to delete, based on this instruction, the connection information memorized in the connection information memory region 233a.

By executing the deletion program 233b2 as described above, the CPU 231 functions as a deletion unit.

The judgement program 233b3 allows the CPU 231 to realize a function to judge whether a predetermined time has passed or not since the CPU 231 having executed the determination program 233b1 determines that the connection information memory region 233a does not memorize the connection information or since the CPU 231 having executed the deletion program 233b2 has deleted the connection information memorized in the connection information memory region 233a.

Specifically, when the CPU 231 having executed the determination program 233b1 determines that the connection information memory region 233a does not memorize the connection information or when the CPU 231 having executed the deletion program 233b2 has deleted the connection information memorized in the connection information memory region 233a, then the CPU 231 executes the judgment program 233b3 to allow a timer section (not shown) to start timekeeping to judge whether the time obtained by the timekeeping exceeds the predetermined time or not.

By executing the judgment program 233b3 as described above, the CPU 231 functions as a judgment unit.

The output section 24 includes, for example, a monitor (not shown) and/or a speaker (not shown) and outputs image information from the monitor (not shown) and/or audio information from the speaker (not shown) in accordance with an instruction from the control section 23.

Specifically, the output section 24 functions, for example, as the second annunciation unit that annunciates, based on the instruction from the CPU 231, that the reception of the connection information is failed by displaying so on a monitor (not shown) when the light-receiving section 26 cannot receive the connection information transmitted by the remote controller 1a until the CPU 231 having executed the judgment program 233b3 judges that the predetermined time has passed.

The LED 25 blinks with a predetermined timing based on, for example, an instruction from the control section 23.

Specifically, the LED 25 functions, for example, as an annunciation unit (the first annunciation unit) that annunciates, based on the instruction from the CPU 231, that the connection information memory region 233a does not memorize the connection information by the blinking operation when the CPU 231 having executed the determination program 233b1 determines that the connection information memory region 233a does not memorize the connection information or when the CPU 231 having executed the deletion program 233b2 deletes the connection information memorized in the connection information memory region 233a.

It is noted that the LED 25 continues blinking with a predetermined timing until the connection information memory region 233a memorizes the connection information.

The light-receiving section 26 receives the connection information transmitted from the remote controller 1a based on, for example, an instruction from the control section 23.

Specifically, the light-receiving section 26 functions, for example, as a reception unit that receives, in accordance with the instruction from the CPU 231, the connection information transmitted from the light emitting section 1a2 of the remote controller 1a by way of infrared ray for example when the CPU 231 having executed the determination program 233b1 determines that the connection information memory region 233a does not memorize the connection information or when the CPU 231 having executed the deletion program 233b2 deletes the connection information memorized in the connection information memory region 233a.

It is noted that the light-receiving section 26 is structured so as not to receive, based on the instruction from the CPU 231, the connection information transmitted from the remote controller 1a when the connection information memory region 233a memorizes the connection information (i.e., the CPU 231 having executed the determination program 233b1 determines that the connection information memory region 233a memorizes the connection information) or when the CPU 231 having executed the deletion program 233b2 does not delete the connection information memorized in the connection information memory region 233a.

### <Processing for setting connection information>

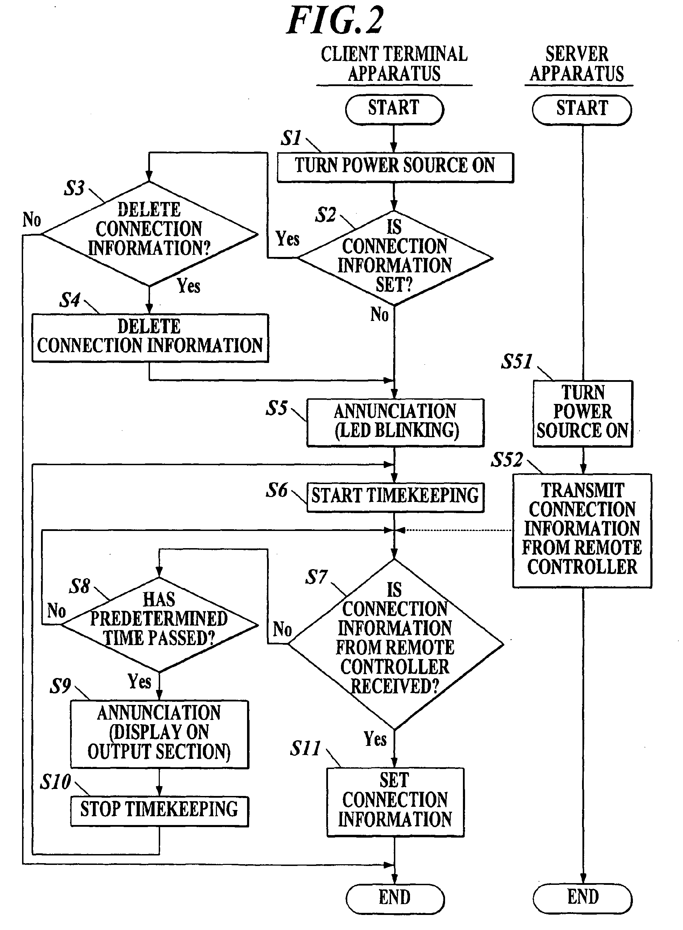

Next, a processing in the client-server system S for setting the connection information to the client terminal apparatus 2 will be described with reference to a flowchart of FIG. 2.

First, a user depresses a "power source key" of the operation section 21 of the client terminal apparatus 2 to turn ON the power source of the client terminal apparatus 2 (Step S1). Then, the CPU 231 of the client terminal apparatus 2 executes the determination program 233b1 to determine whether the connection information memory region 233a memorizes the connection information or not (i.e., whether the client terminal apparatus 2 is set with the connection information or not) (Step S2).

When it is determined in Step S2 that the client terminal apparatus 2 is set with the connection information (Step S2; Yes), then the CPU 231 determines whether the operation by the user of the operation section 21 instructs the deletion of the connection information memorized in the connection information memory region 233a or not (Step S3).

When it is determined in Step S3 that the deletion of the connection information is not instructed (Step S3;No), then the CPU 231 completes this processing.

On the other hand, when it is determined in Step S3 that the deletion of the connection information is instructed (Step S3; Yes), then the CPU 231 executes the deletion program 233b2 to delete the connection information memorized in the connection information memory region 233a (Step S4) and the processing of Step S5 is started.

When it is determined in Step S2 that the client terminal apparatus 2 is not set with the connection information (Step S2; No), then the CPU 231 allows the LED25 to blink with a predetermined timing to annunciate that the client terminal apparatus 2 is not set with the connection information (Step S5).

With the LED 25 blinking with a predetermined timing, the user depresses the "power source key" of the operation section 11 of the server apparatus 1 to turn ON the power source of the server apparatus 1 (Step S51). Then, the CPU 141 of the server apparatus 1 executes the transmission program 143b1 to obtain the connection information from the connection information memory region 143a. Then, the CPU 141 transmits the obtained connection information via the remote controller communication section 13 to the server communication section 1a1 of the remote controller 1a. Next, the server communication section 1a1 of the remote controller 1a receives the transmitted connection information and the light emitting section 1a2 transmits the received connection information to the light-receiving section 26 of the client terminal apparatus 2 (Step S52).

When the processing of Step S5 is completed, the CPU 231 of the client terminal apparatus 2 executes the judgment program 233b3 to allow a timer section (not shown) to start timekeeping (Step S6). Then, the CPU 231 determines whether the light-receiving section 26 has received the connection information transmitted from the remote controller 1a or not (Step S7).

When it is determined in Step S7 that the light-receiving section 26 has not received the connection information (Step S9; No), then the CPU 231 judges whether the time measured by the timekeeping started in Step S6 exceeds the predetermined time or not (i.e., whether the predetermined time has passed since the start of the processing of Step S6 or not) (Step S8).

When it is judged in Step S8 that the predetermined time has not passed (Step S8; No), the CPU 231 repeats the processings after Step S7.

When it is judged in Step S8 that the predetermined time has passed (Step S8; Yes), then the CPU 231 allows a monitor (not shown) of the output section 24 to display and annunciate that the reception of the connection information is failed (Step S9).

When the failure of the reception of the connection information is displayed by the monitor (not shown) of the output section 24, then a user again turns ON the power source of the server apparatus 1 for example (Step S51). Then, the remote controller 1a transmits the connection information (Step S52).

Next, the CPU 231 stops the timekeeping started in Step S6 (Step S10), then the processings after Step S6 are started.

When it is determined in Step S7 that the light-receiving section 26 has received the connection information (Step S7; Yes), then the CPU 231 allow the received connection information to be memorized in the connection information memory region 233a and the connection information is set with the client terminal apparatus 2 (Step S11), thereby completing this processing.

When this processing is completed, then an authentication processing is started between the server apparatus 1 and the client terminal apparatus 2.

According to the client-server system S of the present invention as described above, the transmission unit of the server apparatus 1 (the remote controller 1a, the CPU 141 having executed the transmission program 143b1, the remote controller communication section 13) can be used to transmit to the client terminal apparatus 2, immediately after the turning ON of the power source of the server apparatus 1, the connection information required for the client terminal apparatus 2 to be connected to the server apparatus 1 via the wireless network N. Then, the connection information recording region 233a of the client terminal apparatus 2 can memorize the connection information. Specifically, a mere setting by a user to turn ON the power source of the server apparatus 1 can automatically set the client terminal apparatus 2 with the connection information to allow, without causing a troublesome task to the user, the connection information to be set with the client terminal apparatus 2.

Furthermore, the CPU 231 having executed the deletion program 233b2 of the client terminal apparatus 2 can be used to delete the connection information memorized in the connection information memory region 233a to prevent the client terminal apparatus 2 from being set with the connection information. Thus, the server apparatus 1 to be connected can be changed easily.

Then, when the CPU 231 having executed the determination program 233b1 determines that the connection information memory region 233a does not memorize the connection information or when the CPU 231 having executed the deletion program 233b2 deletes the connection information memorized in the connection information memory region 233a, then the LED 25 of the client terminal apparatus 2 annunciates that the connection information memory region 233a does not memorize the connection information. Thus, the user can know whether the client terminal apparatus 2 is set with the connection information or not also can know a timing at which the power source of the server apparatus 1 should be turned ON.

Furthermore, only when the CPU 231 having executed the determination program 233b1 determines that the connection information memory region 233a does not memorize the connection information and only when the CPU 231 having executed the deletion program 233b2 deletes the connection information memorized in the connection information memory region 233a, then the light-receiving section 26 of the client terminal apparatus 2 receives the connection information transmitted from the remote controller 1a, thus providing an efficient procedure.

Furthermore, the CPU 231 having executed the judgment program 233b3 of the client terminal apparatus 2 can judge whether the predetermined time has passed or not since the CPU 231 having executed the determination program 233b1 determines that the connection information memory region 233a does not memorize the connection information or since the CPU 231 having executed the deletion program 233b2 deletes the connection information memorized in the connection information memory region 233a. Then, the output section 24 of the client terminal apparatus 2 can be used, when the light-receiving section 26 cannot receive the connection information transmitted from the remote controller 1a until the CPU 231 having executed the judgment program 233b3 judges that the predetermined time has passed, to annunciate that the connection information could not be received. This allows a user to know that the client terminal apparatus 2 has failed to receive the connection information and to know a timing at which the power source of the server apparatus 1 should be turned ON again.

Furthermore, the remote controller 1a is an existing remote controller for operating various AV apparatuses 1b connected to the server apparatus 1 and/or the server apparatus 1. This eliminates a need for newly providing another apparatus and thus the client-server system S can be structured with low cost. Furthermore, the remote controller 1a can be used to transmit the connection information from the server apparatus 1 to the client terminal apparatus 2. This increases a freedom degree for the layout of the server apparatus 1 and the client terminal apparatus 2, which is preferable.

Furthermore, the connection information includes an identifier of the wireless network N and an encryption key required for the server apparatus 1 and the client terminal apparatus 2 to have communication via the wireless network N. Thus, the server apparatus 1 can authenticate the client terminal apparatus 2 accurately.

It is noted that the present invention is not limited to the above-described embodiments and can be appropriately changed within a scope not deviating from the intention.

The server apparatus 1 constituting the client-server system S also may be a server apparatus functioning as an access point.

Furthermore, an external apparatus connected with the server apparatus 1 is not limited to various AV apparatuses 1b and also may be any preferable arbitrary external apparatus.

Furthermore, it is possible that the server apparatus 1 is not connected with an external apparatus.

The quantity of the client terminal apparatus 2 connected to the server apparatus 1 is not limited to the quantity shown in FIG. 1 and the client terminal apparatus 2 of an arbitrary number also may be provided.

Although the above section has described a structure in which, when the connection information memory region 233a does not memorize the connection information, the LED 25 blinks to annunciate that the connection information is memorized, another structure also may be used in which, for example, the output section 24 annunciates that the connection information is memorized by an indication or audio.

Although the above section has described a structure in which, when the light-receiving section 26 cannot receive the connection information transmitted from the remote controller 1a within a predetermined time, the output section 24 displays that the connection information cannot be received, another structure also may be used, for example, in which audio from the output section 24 or the blinking of the LED 25 annunciates that the connection information cannot be received.

## Claims

1. A client-server system comprising a server apparatus (1) and a client terminal apparatus (2) connected to the server apparatus to have communication with the server apparatus (1) via a wireless network (N), wherein:
the server apparatus (1) comprises:
a transmission unit for transmitting connection information required for the client terminal apparatus (2) to be connected to the server apparatus (1) via a wireless network (N), to the client terminal apparatus (2) immediately after a turning ON of a power source,
the client terminal apparatus (2) comprises:
a memory unit (233a) for memorizing the connection information; and
a reception unit for receiving the connection information transmitted from the transmission unit;
**characterized by**
a determination unit (233b1) for determining whether the memory unit (233a) memorizes the connection information or not;
a deletion unit (233b2) for deleting the connection information memorized in the memory unit (233a);
a first annunciation unit for annunciating that the memory unit does not memorize the connection information when the determination unit determines that the memory unit does not memorize the connection information or when the deletion unit deletes the connection information memorized in the memory unit;
wherein the reception unit receives the connection information when the determination unit determines that the memory unit does not memorize the connection information or when the deletion unit deletes the connection information memorized in the memory unit;
a judgment unit (233b) for judging whether a predetermined time has passed or not since the determination unit determines that the memory unit does not memorize the connection information or since the deletion unit deletes the connection information memorized in the memory unit; and
a second annunciation unit for annunciating that the connection information is not received when the reception unit fails to receive the connection information transmitted from the transmission unit until the judgment unit judges that the predetermined time has passed.

2. The client-server system as claimed in claim 1, wherein:
the transmission unit comprises a remote controller for operating an external apparatus connected to the server apparatus and/or the server apparatus, and
the connection information is transmitted from the remote controller to the reception unit by infrared ray.

3. The client-server system as claimed in claim 1 or 2, wherein:
the connection information comprises an identifier of the wireless network and an encryption key required for the server apparatus and the client terminal apparatus to have communication via the wireless network.

## Patentansprüche

1. Client-Server-System, umfassend eine Server-Vorrichtung (1) und eine Client-Endgerät-Vorrichtung (2), die mit der Server-Vorrichtung verbunden ist, um eine Kommunikation mit der Server-Vorrichtung (1) über ein drahtloses Netzwerk (N) zu ermöglichen, wobei:
die Server-Vorrichtung (1) Folgendes umfasst:
eine Sendeeinheit zum Senden von Verbindungsinformationen, die der Client-Endgerät-Vorrichtung (2) für die Verbindung mit der Server-Vorrichtung (1) über das drahtlose Netzwerk (N) erforderlich sind, an die Client-Endgerät-Vorrichtung (2) unmittelbar nach dem Einschalten einer Stromversorgung,
die Client-Endgerät-Vorrichtung (2) Folgendes umfasst:
eine Speichereinheit (233a) zum Speichern der Verbindungsinformationen; und
eine Empfangseinheit zum Empfangen der durch die Sendeeinheit gesendeten Verbindungsinformationen;
**gekennzeichnet durch**
eine Bestimmungseinheit (233b1) zum Bestimmen, ob die Speichereinheit (233a) die Verbindungsinformationen speichert oder nicht;
eine Löscheinheit (233b2) zum Löschen der in der Speichereinheit (233a) gespeicherten Verbindungsinformationen;
eine erste Mitteilungseinheit zum Mitteilen, dass die Speichereinheit die Verbindungsinformationen nicht speichert, wenn die Bestimmungseinheit bestimmt, dass die Speichereinheit die Verbindungsinformationen nicht speichert oder wenn die Löscheinheit die in der Speichereinheit gespeicherten Verbindungsinformationen löscht;
wobei die Empfangseinheit die Verbindungsinformationen empfängt, wenn die Bestimmungseinheit bestimmt, dass die Speichereinheit die Verbindungsinformationen nicht speichert oder wenn die Löscheinheit die in der Speichereinheit gespeicherten Verbindungsinformationen löscht;
eine Bewertungseinheit (233b) zum Bewerten, ob eine vorbestimmte Zeitdauer, seitdem die Bestimmungseinheit bestimmt, dass die Speichereinheit die Verbindungsinformationen nicht speichert oder seitdem die Löscheinheit die in der Speichereinheit gespeicherten Verbindungsinformationen löscht, abgelaufen ist oder nicht; und
eine zweite Mitteilungseinheit zum Mitteilen, dass die Verbindungsinformationen nicht empfangen werden, wenn die Empfangseinheit es versäumt, die **durch** die Sendeeinheit gesendeten Verbindungsinformationen zu empfangen, bis die Bewertungseinheit bewertet, dass die vorbestimmte Zeitdauer abgelaufen ist.

2. Client-Server-System gemäß Anspruch 1, wobei:
die Sendeeinheit eine Fernbedienung zum Betreiben einer externen Vorrichtung umfasst, die mit der Server-Vorrichtung und/oder der Server-Vorrichtung verbunden ist, und
die Verbindungsinformationen von der Fernbedienung zur Empfangseinheit über eine Infrarotstrahlung gesendet werden.

3. Client-Server-System gemäß Anspruch 1 oder 2, wobei:
die Verbindungsinformationen eine Kennung des drahtlosen Netzwerkes und einen Codierungsschlüssel umfassen, die der Server-Vorrichtung und der Client-Endgerät-Vorrichtung erforderlich sind, um eine Kommunikation über das drahtlose Netzwerk zu ermöglichen.

## Revendications

1. Système client-serveur comportant un dispositif serveur (1) et un dispositif de terminal client (2) connecté au dispositif serveur pour assurer une communication avec le dispositif serveur (1) via un réseau sans fil (N), dans lequel :
le dispositif serveur (1) comporte :
une unité d'émission destinée à émettre, vers le dispositif de terminal client (2), des informations de connexion nécessaires pour la connexion du dispositif de terminal client (2) au dispositif serveur (1) via le réseau sans fil (N), immédiatement après une mise sous tension d'une source d'alimentation,
le dispositif de terminal client (2) comportant :
une unité de mémoire (233a) destinée à mémoriser les informations de connexion ; et
une unité de réception, destinée à recevoir les informations de connexion émises par l'unité d'émission ;
**caractérisé par**
une unité de détermination (233b1) destinée à déterminer si l'unité de mémoire (233a) mémorise ou non les informations de connexion ;
une unité de suppression (233b2) destinée à supprimer les informations de connexion mémorisées dans l'unité de mémoire (233a) ;
une première unité d'annonce destinée à annoncer que l'unité de mémoire ne mémorise pas les informations de connexion lorsque l'unité de détermination détermine que l'unité de mémoire ne mémorise pas les informations de connexion ou lorsque l'unité de suppression supprime les informations de connexion mémorisées dans l'unité de mémoire ;
dans lequel l'unité de réception reçoit les informations de connexion lorsque l'unité de détermination détermine que l'unité de mémoire ne mémorise pas les informations de connexion ou lorsque l'unité de suppression supprime les informations de connexion mémorisées dans l'unité de mémoire ;
une unité de jugement (233b) destinée à juger si une durée prédéterminée s'est écoulée ou non depuis la détermination par l'unité de détermination que l'unité de mémoire ne mémorise pas les informations de connexion ou depuis la suppression par l'unité de suppression des informations de connexion mémorisées dans l'unité de mémoire ; et
une seconde unité d'annonce destinée à annoncer que les informations de connexion n'ont pas été reçues lorsque l'unité de réception ne parvient pas à recevoir les informations de connexion émises par l'unité d'émission tant que l'unité de jugement n'a pas jugé que la durée prédéterminée est écoulée.

2. Système client-serveur selon la revendication 1 dans lequel :
l'unité d'émission comporte une télécommande destinée à faire fonctionner un dispositif externe connecté au dispositif serveur et/ou au dispositif serveur, et
les informations de connexion sont émises par la télécommande vers l'unité de réception par rayonnement infrarouge.

3. Système client-serveur selon la revendication 1 ou 2, dans lequel :
les informations de connexion comportent un identifiant du réseau sans fil et une clé de cryptage nécessaires pour que le dispositif serveur et le dispositif de terminal client puissent assurer une communication via le réseau sans fil.
